# EUROPEAN PATENT APPLICATION

(11) **EP 4 640 918 A1**
(43) Date of publication of application: **29.10.2025**
(21) Application number: 23907444.6
(22) Date of filing: 20.11.2023
(51) Int. Cl.: C23C 22/08, C23C 22/74, C21D 8/12, C21D 9/46, H01F 1/147

(54) **COMPOSITION FOR FORMING INSULATING FILM ON ELECTRICAL STEEL SHEET, ELECTRICAL STEEL SHEET, AND METHOD FOR MANUFACTURING ELECTRICAL STEEL SHEET**

(30) Priority: 21.12.2022 KR 20220180223
(71) Applicant: POSCO Co., Ltd, Pohang-si, Gyeongsangbuk-do 37859 (KR)
(72) Inventor: HAN, Minsoo, Pohang-si, Gyeongsangbuk-do 37859 (KR); KO, Hyunseok, Pohang-si, Gyeongsangbuk-do 37859 (KR); KIM, Jaekyoum, Pohang-si, Gyeongsangbuk-do 37859 (KR); PARK, Gyeongryeol, Pohang-si, Gyeongsangbuk-do 37859 (KR)
(74) Representative: Meissner Bolte Partnerschaft mbB
(86) International application number: PCT/KR2023/018651
(87) International publication number: WO 2024/136158

(57) **Abstract**

A composition for forming an insulation film of an electrical steel sheet according to an embodiment of the present disclosure includes: 100 parts by weight of metal phosphate that includes at least one of Al, Mg, Co, Ca, Sr, Ba, Zn, and Mn; 3 to 150 parts by weight of a carbon structure; 3 to 150 parts by weight of oxide that includes at least two of Al, Si, Mg, and Fe; and 50 to 250 parts by weight of silica. A sum amount of the carbon structure and the oxide includes 20 to 150 parts by weight.

## Description

### [Technical Field]

An embodiment of the present disclosure relates to a composition for forming an insulation film of an electrical steel sheet, the electrical steel sheet, and a method for manufacturing the electrical steel sheet. More specifically, the embodiment of the present disclosure relates to a composition for forming an insulation film of an electrical steel sheet capable of improving an insulating characteristic and a tension characteristic of the insulation film and simultaneously maintaining a high tensile strength characteristic even after stress relief annealing by including a carbon structure and oxide in a primary component based on metal phosphate silica and capable of dramatically increasing a surface good quality ratio of a mass-produced product by imparting a flowing color to the insulation film, the electrical steel sheet, and a method for manufacturing the electrical steel sheet.

### [Background Art]

A grain-oriented electrical steel sheet is generally a steel sheet including a large amount of Si, and has a texture in which an orientation of a grain is aligned in a direction of (110)[001] to show an excellent magnetic characteristic in a rolling direction.

It is known that the magnetic characteristic is further improved if an insulation property is improved by reducing an iron loss of the grain-oriented electrical steel sheet. The grain-oriented electrical steel sheet that is currently commercialized is promoting an effect of reducing the iron loss by adding a tensile stress to the steel sheet using a difference in thermal expansion coefficient between the steel sheet and an insulation film (e.g., a secondary film) formed on a forsterite-based base film (e.g., a primary film). In this regard, one of methods for reducing the iron loss of the grain-oriented electrical steel sheet that is a method for forming a high tensile strength insulation film on a surface thereof is being actively studied.

The primary film of the grain-oriented electrical steel sheet refers to a forsterite (2MgO·SiO₂) layer formed by a reaction of silicon oxide (SiO₂) generated on a surface of a material during a primary recrystallization decarbonization process and magnesium oxide (MgO) used as an annealing separator. The primary film formed during high-temperature annealing has to have a uniform color without a defect in appearance, may functionally prevent fusion between a sheet and a sheet in a coil state, and may improve the iron loss of the material by applying a tensile stress to the material due to a difference in thermal expansion coefficient between the material and the primary film. However, above all, an excellent characteristic of the primary film basically has to have a uniform color without a defect on a surface of the material, and because a commercialized product is especially manufactured in a form of a large coil, it is very difficult to maintain a uniform film characteristic over the entire coil length. Occurrence of a bare spot or an oxidation defect may not be avoided because a discharge amount of hydrated moisture varies depending on a position and a portion of the coil in the grain-oriented electrical steel sheet commercially produced in a form of the coil. In particular, the secondary film formed with a conventional phosphate-based tension coating agent exposes a defect of the primary film present in a lower part of the secondary film due to an insufficient shielding property due to high transparency. Therefore, in a mass production process, an exposed defective portion is cut off and then a product is shipped so that a unit price of the product is increased due to a decrease in yielding percentage.

The coil formed with a tension coating that is the secondary film is slit to a size desired by a transformer manufacturer and then is supplied in a hoop shape, and depending on its use, it is manufactured into a laminated core transformer and a wound core transformer. In order to improve efficiency when the transformer is manufactured, Insulation between sheets may be very important. In general, increasing the coating thickness may improve the insulation, but no-load loss may be decreased so that efficiency of the transformer is ultimately reduced.

In order to solve the problem and maximize a property of the film such as a tension of the film and insulation, it is necessary to introduce an insoluble substance into a coating agent. However, when the insoluble substance is introduced, technical problems such as reduction in roughness and gloss as well as occurrence of a pore within the film after formation of the film emerge, so that this is not actually applied.

Accordingly, a colored secondary film product that may shield an oxidation defect occurring in the primary film and has an excellent insulation property even at a thin film coating thickness is required. However, because a conventional coating agent of the grain-oriented electrical steel sheet does not satisfy the condition, a commercialization technology for this is required.

### [Disclosure]

### [Technical Problem]

An embodiment of the present disclosure provides a composition for forming an insulation film of an electrical steel sheet, an electrical steel sheet, and a method for manufacturing the electrical steel sheet. Specifically, the embodiment of the present disclosure provides a composition for forming an insulation film of an electrical steel sheet including a carbon structure and oxide in a primary component based on metal phosphate silica, the electrical steel sheet, and a method for manufacturing the electrical steel sheet.

### [Technical Solution]

A composition for forming an insulation film of an electrical steel sheet according to an embodiment of the present disclosure includes: 100 parts by weight of metal phosphate that includes at least one of Al, Mg, Co, Ca, Sr, Ba, Zn, and Mn; 3 to 150 parts by weight of a carbon structure; 3 to 150 parts by weight of oxide that includes at least two of Al, Si, Mg, and Fe; and 50 to 250 parts by weight of silica. A sum amount of the carbon structure and the oxide includes 20 to 150 parts by weight.

The carbon structure may include at least one of natural graphite, artificial graphite, carbon black, a carbon nanotube, a carbon fiber, and graphene.

The oxide including the at least two of Al, Si, Mg, and Fe may include at least one of montmorillonite, kaolinite, illite, talc, and chromite.

An average particle size of the silica may be 7 to 20 nm.

The composition may further include 2 to 10 parts by weight of chromium oxide.

An electrical steel sheet according to an embodiment of the present disclosure includes: an electrical steel sheet substrate; and an insulation film that is disposed on a surface of the electrical steel sheet substrate. The insulation film includes 100 parts by weight of metal phosphate that includes at least one of Al, Mg, Co, Ca, Sr, Ba, Zn, and Mn, 3 to 150 parts by weight of a carbon structure, 3 to 150 parts by weight of oxide that includes at least two of Al, Si, Mg, and Fe, and 50 to 250 parts by weight of silica, and a sum amount of the carbon structure and the oxide includes 20 to 150 parts by weight.

The insulation film may have a surface roughness of 0.5 µm or less, and may have a film transparency of 20% or less.

The insulation film may include, in wt%, P: 6.0 to 45%, Si: 11 to 80%, Cr: 0.5 to 10%, at least one of Al, Mg, Co, Ca, Sr, Ba, Zn, Fe, and Mn: 0.1 to 35%, C: 1 to 40%, and the balance of oxygen (O) and an inevitable impurity.

A method for manufacturing the electrical steel sheet according to an embodiment of the present disclosure includes: preparing an electrical steel sheet substrate; applying the composition for forming the insulation film to a surface of the electrical steel sheet substrate; and heat-treating the applied composition.

The method may further include keeping the composition for forming the insulation film at a temperature of 10 to 30°C before the applying of the composition.

The composition for forming the insulation film may be applied in a range of 0.5 to 6.0 g/m² in the applying of the composition.

The applied composition may be heat-treated at 550 to 900°C for 10 to 50 seconds.

### [Advantageous Effects]

A composition for forming an insulation film of an electrical steel sheet according to an embodiment of the present disclosure may improve a film tension and an insulating characteristic of the insulation film and may simultaneously maintain a high film tension characteristic even after stress relief annealing (SRA), and may dramatically increase a surface good quality ratio of a mass-produced product by imparting beautiful roughness to the insulation film to impart excellent gloss and an elegant color.

### [Description of the Drawings]

FIG. 1 is a schematic diagram of a cross-section of an electrical steel sheet according to an embodiment of the present disclosure.
FIG. 2 is a photograph of a cross-section of an electrical steel sheet manufactured in Embodiment 1 taken with a scanning electron microscope (SEM).
FIG. 3 is a photograph of a cross-section of an electrical steel sheet manufactured in Comparative Example 8 with a scanning electron microscope (SEM).

### [Mode for Invention]

Terms such as "first", "second", and "third" are used herein to describe various portions, components, regions, layers, and/or sections, but are not limited thereto. The terms are used only to distinguish one portion, component, region, layer, or section from another portion, component, region, layer, or section. Accordingly, a first portion, component, region, layer, or section described below may be referred to as a second portion, component, region, layer, or section within a scope that does not depart from a scope of the present disclosure.

A technical term used herein is intended only to refer to a specific embodiment, and is not intended to limit the present disclosure. Singular forms used herein also include plural forms unless phrases clearly indicate an opposite meaning. A term "include" used in the specification specifies a specific characteristic, region, integer, step, operation, element, and/or component, and does not exclude presence or addition of another characteristic, region, integer, step, operation, element, and/or component.

When it is said that a portion is "on" or "above" another portion, the portion may be disposed directly on or above the other portion, or another portion may be interposed therebetween. In contrast, when a portion is said to be "directly above" another portion, no other portion is interposed therebetween.

Unless otherwise stated, % means wt%, and 1 ppm is 0.0001 wt%.

In an embodiment of the present disclosure, inclusion of an additional element means replacing the balance of iron (Fe) or oxygen(O) by an additional amount of the additional element.

Although not otherwise defined, all terms used herein, including a technical term and a scientific term, have the same meanings as those generally understood by a person of ordinary skill in the art to which the present disclosure belongs. Terms defined in a dictionary commonly used are additionally interpreted to have a meaning consistent with the relevant technical literature and the presently disclosed contents, and are not interpreted in an ideal or very formal sense unless otherwise defined.

Hereinafter, an embodiment of the present disclosure will be described in detail so that a person of ordinary skill in the art to which the present disclosure belongs may easily implement the present disclosure. The present disclosure may be modified in various ways, all without departing from the spirit or scope of the present disclosure.

A composition for forming an insulation film of an electrical steel sheet according to an embodiment of the present disclosure may include 100 parts by weight of metal phosphate including at least one of Al, Mg, Co, Ca, Sr, Ba, Zn, and Mn, 10 to 150 parts by weight of a carbon structure, 10 to 150 parts by weight of oxide including at least two of Al, Si, Mg, and Fe, and 50 to 250 parts by weight of silica.

Hereinafter, each component will be described in detail. In an embodiment of the present disclosure, the parts by weight may mean a relative weight ratio based on 100 parts by weight of the metal phosphate, and may be based on a solid content of each component. The solid content may refer to a weight when each component is dried in a state in which a volatile matter such as a solvent does not exist. For example, it may refer to a weight remaining after heat treatment when a heat treatment process is performed during formation of the insulation film.

**The** metal phosphate may serve as a binder in the composition for forming the insulation film. **If** the metal phosphate is not included in an appropriate amount, adhesiveness of the insulation film may be deteriorated, or a tension may not be sufficiently obtained.

**The** metal phosphate may be manufactured by a manufacturing process in which metal oxide is added to pure phosphoric acid (H₃PO₄) to react with the pure phosphoric acid (H₃PO₄). In order to improve the adhesiveness of the metal phosphate, boric acid may be additionally added during a reaction process and may be maintained for 3 hours or more to induce a condensation reaction between the metal phosphate and the boric acid, and the condensation reactant may be used instead of the metal phosphate. In an embodiment of the present disclosure, the metal phosphate may include not only the metal phosphate but also a condensation reactant of the metal phosphate and the boric acid. The manufactured metal phosphate may exhibit strong acidity.

The metal phosphate may be added to a composition using a solution having a solid content of 50 to 70 wt%. In this case, if the solid content within the solution is too small, free phosphoric acid may be increased within the metal phosphate so that surface moisture absorption occurs after the metal phosphate is manufactured, and if the solid content is too large, a reaction may be poor and precipitation may occur due to an excess of the solid content compared with the pure phosphoric acid.

The metal phosphate and the metal oxide may include various metals without limitation. For example, a metal of each of the metal phosphate and metal oxide may include one or more of Al, Mg, Co, Ca, Sr, Ba, Zn, and Mn. In some embodiments, the metal phosphate may include at least one of monobasic magnesium phosphate (Mg(H₂PO₄)₂) and monobasic aluminum phosphate (Al(H₂PO₄)₃). For example, the metal phosphate may include the monobasic magnesium phosphate (Mg(H₂PO₄)₂) and the monobasic aluminum phosphate (Al(H₂PO₄)₃). In this case, based on a solid content, the metal phosphate may include 10 to 40 parts by weight of the monobasic aluminum phosphate and 60 to 90 parts by weight of the monobasic magnesium phosphate based on a total 100 parts by weight. If too little monobasic aluminum phosphate is included, an effect of improving a tension by adding the monobasic aluminum phosphate may not be sufficient. If too much monobasic aluminum phosphate is added, an Al component may increase crystallization of silica to cause a crack within the insulation film. For example, based on a solid content, the metal phosphate may include 15 to 35 parts by weight of the monobasic aluminum phosphate and 65 to 85 parts by weight of the monobasic magnesium phosphate or 20 to 30 parts by weight of the monobasic aluminum phosphate and 70 to 80 parts by weight of the monobasic magnesium phosphate based on a total 100 parts by weight.

A composition for forming the insulation film according to an embodiment of the present disclosure may include 3 to 150 parts by weight of a carbon structure based on 100 parts by weight of the metal phosphate. The carbon structure may be added to improve a shielding property and a tension of the film. Improving the shielding property may mean lowering transparency to increase a color and shielding performance. Improving the tension of the film may mean imparting a tensile stress to the material by lowering a thermal expansion coefficient of the film formed using a low thermal expansion coefficient of the carbon structure. If too little carbon structure is included, there may be an advantage in which a pore is hardly generated within the film after the film is formed, but a color of the film may become pale and transparency may be increased so that a shielding effect is significantly degraded. Because a tension applied to the material by the film is insignificant, an effect of improving iron loss by the tension of the film may not be expected. If too much carbon structure is included, a solid fraction within the composition may be increased so that agglomeration and sedimentation between carbon structures occur and a pore is formed at an interface of the carbon structure after the film is formed. Thus, a tension and insulation of the film may be significantly reduced. Therefore, for example, it may include 10 to 150 parts by weight of the carbon structure based on 100 parts by weight of the metal phosphate.

The carbon structure may include one or more of natural graphite, artificial graphite, carbon black, a carbon nanotube, a carbon fiber, and graphene. For example, it may include the carbon black.

The carbon structure may have an average particle size of 10¹ nm to 10⁶ nm. For example, the carbon structure may have the average particle size of 10¹ nm to 10³ nm. If the average particle size of the carbon structure is too small, it may be difficult for carbon structures to be evenly dispersed in a solution due to electrostatic attraction of a particle itself, and if the average particle size is too large, a sedimentation phenomenon may quickly occur within the solution so that there is a problem in which proper performance is difficult. The average particle size may be measured by dispersing particles within the solution and scattering the particles with a laser.

A composition for forming the insulation film according to an embodiment of the present disclosure may include 3 to 150 parts by weight of oxide including at least two of Al, Si, Mg, and Fe based on 100 parts by weight of the metal phosphate. The oxide may be added to improve a shielding property and a tension of the film. Improving the shielding property may mean lowering transparency to increase a color and shielding performance. Improving the tension of the film may mean imparting a tensile stress to the material by lowering a thermal expansion coefficient of the film formed using a low thermal expansion coefficient of the oxide. If too little carbon oxide is included, there may be an advantage in which a pore is hardly generated within the film after the film is formed, but a color of the film may become pale and transparency may be increased so that a shielding effect is significantly degraded. Because a tension applied to the material by the film is insignificant, an effect of improving iron loss by the tension of the film may not be expected. If too much oxide is included, a solid fraction within the composition may be increased so that agglomeration and sedimentation between oxides occur and a pore is formed at an interface of the oxide after the film is formed. Thus, a tension and insulation of the film may be significantly reduced. Therefore, for example, it may include 10 to 150 parts by weight of the oxide based on 100 parts by weight of the metal phosphate.

The oxide including the at least two of Al, Si, Mg, and Fe may include at least one of montmorillonite, kaolinite, illite, talc, and chromite. For example, it may include montmorillonite (Mₓ(Al₄₋ₓMgₓ)Si₈O₂₀ OH)₄). The oxide including the at least two of Al, Si, Mg, and Fe may have a lower thermal expansion coefficient than that of oxide (e.g., Al₂O₃) to increase the tension of the film so that it has an advantage in improving iron loss.

The oxide including the at least two of Al, Si, Mg, and Fe may have an average particle size of 10² to 10⁵ nm. If the average particle size of the oxide is too small, it may be difficult for oxides to be evenly dispersed in a solution due to electrostatic attraction of a particle itself, and if the average particle size is too large, a sedimentation phenomenon may quickly occur within the solution so that there is a problem in which proper performance is difficult. The average particle size may be measured by dispersing particles within the solution and scattering the particles with a laser.

The oxide may have a component ratio between Al, Si, Mg, and Fe, and based on a total 100 wt% of Al, Si, Mg, and Fe within a particle of the oxide, Al may include 15 to 45 wt%, Si may include 40 to 70 wt%, Mg may include 0.1 to 5 wt%, and Fe may include 1 to 10 wt%. A reason limiting a primary component within the oxide may be that elasticity of the film is decreased so that the film tension effect is not observed if there is too little Al within the particle of the oxide and electrical conductivity is increased so that insulation of the film is deteriorated if there is too much Al. If there is too little Si within the particle, an effect of improving the tension of the film may not be observed due to a difference in thermal expansion coefficient therebetween, and if there is too much Si, hardness of the film may be increased so that processability of the material is significantly deteriorated. If there is too little Mg within the particle, affinity between water and the oxide within a coating solution may be degraded so that uniform dispersion of the oxide within the coating solution is degraded, and if there is too much Mg, elasticity of the film may be degraded so that an effect of improving the tension of the film is not observed. If there is too little Fe within the particle, a heat resistance characteristic may be degraded after the film is formed, and if there is too much Fe, a specific gravity of the oxide may be increased to accelerate sedimentation of the oxide, and corrosion resistance of the film may be degraded. For example, based on a total 100 wt% of Al, Si, Mg, and Fe within a particle of the oxide, Al may include 20 to 40 wt%, Si may include 45 to 65 wt%, Mg may include 0.5 to 3 wt%, and Fe may include 3 to 7 wt%. The oxide may additionally include Ca and K.

A sum amount of the oxide and the carbon structure needs to be adjusted. For example, the sum amount of the carbon structure and the oxide may include 20 to 170 parts by weight or 30 to 150 parts by weight based on 100 parts by weight of the metal phosphate. The carbon structure and the oxide need to be similarly acted on a surface forming a pore within the film so that the sum amount of the oxide and the carbon structure needs to be adjusted.

The silica may increase strength and hardness of the film itself through a network reaction within a molecule when the film is dried after coating of the film, so that it plays a role in applying a tension within a material by the film. Various silicas may be used without limitation as the silica, and commercialized colloidal silica may also be used as the silica. For example, basic colloidal silica may be used as the silica. In general, a tension coating agent for a grain-oriented electrical steel sheet may be manufactured by mixing chromium oxide for reinforcing corrosion resistance after formation of the film and solid silica for adjusting roughness and an application property of the film.

The silica may be included in an amount of 50 to 250 parts by weight based on 100 parts by weight of the metal phosphate. If too little silica is added, an effect of improving a tension due to addition of the silica may not be sufficiently obtained. If too much silica is added, an amount of the metal phosphate may be relatively reduced so that adhesiveness of the insulation film is deteriorated. For example, the silica may be included in an amount of 100 to 200 parts by weight or an amount of 125 to 175 parts by weight based on 100 parts by weight of the metal phosphate. In this case, the parts by weight may mean a relative weight based on the metal phosphate.

A condensation reaction by a chain reaction of the silica as shown in Reaction Formula 1 below may occur during a drying process of the film, and a network structure such as -(HO-Si-O-Si)-n may be formed.

[Reaction Formula 1] -(HO-Si-OH-)ₙ + -(HO-Si-OH-)ₙ = -(HO-Si-O-Si-)ₙ + H₂O

However, when only the silica is used, an excessively uniform network structure may be generated so that denseness of the film has its limit. Therefore, there may be a limit in providing adhesiveness between a base material of the electrical steel and an insulating coating or corrosion resistance thereof, and to reinforce the insufficient property, metal phosphate or metal phosphate and chromium oxide may be reinforced.

The silica may be colloidal silica having an average particle size in a range of 7 to 20 nm. The silica may be manufactured using a solution having a solid fraction of 25 to 35 wt%. If the solid fraction is too small, a problem of deteriorating an insulation property may occur. If the solid fraction is too large, there may be a problem in which compatibility is degraded after manufacturing of a coating agent. For example, the solid fraction may be 28 to 32 wt%.

The silica may have an Na⁺ content of 0.1 to 1.0 wt%. If the Na⁺ content is too small, a problem of lowering denseness of the film may occur. If the Na⁺ content is too large, a problem of impairing compatibility between components may occur due to an increase in a positive ion within the coating agent. For example, the Na⁺ content may be 0.3 to 0.7 wt%.

A silica solution including the silica may have a pH of 9.5 to 10.5. If the pH is too low or too high, a phase separation phenomenon may occur due to an extreme pH difference between components other than the silica in the coating composition. For example, the pH may be 9.5 to 10.0.

The silica may have a viscosity of 3.5 to 6.5 cp. If the viscosity is too low, a problem may occur in an application property of the coating composition. If the viscosity is too high, the silica may be thickened when it is used for a long time so that a shelf life problem occurs. For example, the viscosity may be 4 to 6 cp. The viscosity may be measured using a Brookfield viscometer at a temperature of 20°C based on a 30 wt% silica solution.

The silica may have a specific gravity of 1.1 to 1.3. If the specific gravity is too low, it may be difficult to control an application amount of the coating composition. If the specific gravity is too high, a sedimentation problem may occur after the coating agent is manufactured. For example, the specific gravity may be 1.15 to 1.25.

The chromium oxide may be additionally added to enhance corrosion resistance of the insulation film. If the chromium oxide is additionally included, it may be included in an amount of 2 to 10 parts by weight based on 100 parts by weight of the metal phosphate. If too little chromium oxide is included, an effect of enhancing the corrosion resistance may not be sufficient, and it may be difficult to properly perform a neutralization role of the silica that will be described later. If too much chromium oxide is included, there may be a problem in which that a viscosity of the coating agent is rapidly increased. For example, the chromium oxide may be included in an amount of 2 to 8 parts by weight or 4 to 6 parts by weight based on 100 parts by weight of the metal phosphate.

In addition to the above-described component, the composition for forming the insulation film may further include a solvent. The solvent may serve to facilitate application of the composition and uniformly disperse components. An amount of the solvent is not particularly limited, but may be included in an amount of 100 parts by weight to 1000 parts by weight based on 100 parts by weight of the metal phosphate.

A method for manufacturing the composition for forming the insulation film is not particularly limited, but the following method may be used.

The method may include a step of simultaneously introducing metal oxide and a powder (e.g., two or more types of oxides and a carbon structure) to phosphoric acid (H₃PO₄) and then heating and mixing them to manufacture a first composition including metal phosphate and a powder, and a step of mixing silica with the first composition (if necessary, a step of mixing the silica and chromium oxide with the first composition. In this case, because the ratio may be mixed at a solid content ratio described above, a redundant description thereof will be omitted.

Hereinafter, each step will be described in detail.

If a reaction between the phosphoric acid and the metal oxide first proceeds and then the powder is added, a viscosity of the metal phosphate may be rapidly increased after the metal phosphate is manufactured. Therefore, even if the powder is introduced to induce mixing, a phenomenon in which the powder is not evenly dispersed within the metal phosphate and particles agglomerate with each other, may occur.

In an embodiment of the present disclosure, the metal oxide and the powder may be simultaneously introduced to the phosphoric acid to proceed with the reaction between the phosphoric acid and the metal oxide. Thus, the powder may be introduced in a state in which a viscosity of the phosphoric acid is low because the reaction has not yet proceeded so that a very uniform phosphoric acid/powder mixed phase is formed according to a flow induced by stirring, and dispersibility of the powder within the coating composition may be improved so that a shielding property of the film is greatly improved because the mixed phase progresses to a uniform metal phosphate/powder mixed phase with increasingly high viscosity.

In the step of manufacturing the first composition, a heating temperature may be 80°C or higher. If the heating temperature is too low, even if stirring is performed, a phenomenon in which the powder within the metal phosphate does not form a uniform mixed phase and particles agglomerate with each other, may occur.

Next, the silica (if necessary, the silica and the chromium oxide) may be added to and mixed with the first composition.

Because descriptions of the silica and the chromium oxide and descriptions of their contents are described in relation to the composition for forming the insulation film of the electrical steel sheet described above, a redundant description thereof will be omitted.

The silica may be basic, the metal phosphate may be acidic, and a temporary gelation phenomenon due to a significant pH difference between the two components may occur when they are mixed. This may prevent formation of a dense film. In an embodiment of the present disclosure, the chromium oxide may be used as a buffer to serve to neutralize the silica.

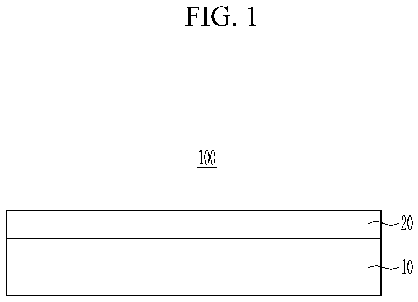

FIG. 1 shows a schematic diagram of a cross-section of an electrical steel sheet 100 according to an embodiment of the present disclosure. As shown in FIG. 1, the electrical steel sheet 100 according to the embodiment of the present disclosure may include an electrical steel sheet substrate 10 and an insulation film 20 disposed on the substrate 10 of the electrical steel sheet.

The electrical steel sheet substrate 10 may use a general non-oriented electrical steel sheet or a general grain-oriented electrical steel sheet without limitation. In an embodiment of the present disclosure, because a main configuration is forming of the insulation film 20 of a special component on the electrical steel sheet substrate 10, a detailed description of the electrical steel sheet substrate 10 will be omitted.

In addition, a component of the grain-oriented electrical steel sheet substrate is described as follows.

The grain-oriented electrical steel sheet substrate may include 2.0 to 7.0 wt% of silicon (Si), 0.020 to 0.040 wt% of aluminum (Al), 0.01 to 0.20 wt% of manganese (Mn), 0.01 to 0.15 wt% of phosphorus (P), 0.01 wt% or less (excluding 0%) of carbon (C), 0.005 to 0.05 wt% of nitrogen, and 0.01 to 0.15 wt% of each of antimony (Sb), tin (Sn), and a combination thereof, and may include the balance of Fe and an inevitable impurity. Because a description of each component of the grain-oriented electrical steel sheet substrate 10 is the same as that generally known, a detailed description thereof will be omitted.

A metal oxide layer (e.g., a base coating layer or a primary film) formed by reacting an annealing separator with an oxide layer of the steel sheet in a secondary recrystallization process may exist between the grain-oriented electrical steel sheet substrate and the insulation film. An example of the metal oxide layer may be a forsterite layer. During the manufacturing process of the grain-oriented electrical steel sheet, it is possible to suppress formation of the metal oxide layer or to remove the metal oxide layer so that the grain-oriented electrical steel sheet substrate and the insulation film are in contact with each other.

A thickness of the insulation film 20 may be 1 to 10 µm. If the thickness of the insulation film 20 is too small, it is difficult to secure adequate insulation. If the thickness of the insulation film 20 is too large, a space factor may be low. In an embodiment of the present disclosure, even if the insulation film 20 having a thin thickness is formed, an appropriate insulation property may be secured. For example, the thickness of the insulation film 20 may be 2 to 5 µm.

The insulation film 20 may maintain a solid content component and a content ratio within the composition of the insulation film described above. For example, the insulation film 20 may include may include 100 parts by weight of metal phosphate including at least one of Al, Mg, Co, Ca, Sr, Ba, Zn, and Mn, 10 to 150 parts by weight of a carbon structure, 10 to 150 parts by weight of oxide including at least two of Al, Si, Mg, and Fe, and 50 to 250 parts by weight of silica. Because a reason limiting each component and its content are the same as that described in the above-described composition, a redundant description thereof will be omitted.

The insulation film 20 may include the carbon structure and the oxide at the same time. The insulation film 20 may include both the carbon structure and the oxide so that it has excellent defect shielding and low thermal expansion coefficient of the oxide and a heat resistance characteristic of the oxide. Thus, the insulation film 20 may exhibit excellent film tension as well as an excellent insulation property before and after stress relief annealing (SRA).

The insulation film 20 may have a surface roughness (Ra) of 0.5 µm or less. If the surface roughness of the insulation film is too high, a space factor may be increased when a material for manufacturing a transformer is stacked so that there may be a problem in which efficiency of the transformer is lowered.

The insulation film 20 may have a film transparency of 20% or less. The film transparency may be measured by reflectometry, and may be defined as an absolute intensity ratio (Ir/li) of a reflected light intensity (Ir) to an incident light intensity (Ii) with respect to a specimen or a reciprocal of (1/Rabs). That is, in the film transparency, 1/Rabs may be equal to Ir/li, and if transmittance of the film is high so that most of incident light is reflected, the film transparency may be close to 100%, whereas if the transmittance of the film is low so that most of incident light is absorbed or scattered by the film, the film transparency may be close to 0%. If the transparency of the film is 20% or less, the film may be opaque and most of light sources incident from the outside may be absorbed or scattered by the film. Thus, an original color of the specimen under the film may not be distinguished so that it has an excellent shielding effect. Conversely, if the film transparency exceeds 20%, the original color of the specimen under the film may be distinguished due to a poor shielding property thereof so a purpose of the present disclosure may not be achieved. For example, the film transparency may be less than or equal to 19%, and may be less than or equal to 10%.

The insulation film may include, in wt%, P: 6.0 to 45%, Si: 11 to 80%, Cr: 0.5 to 10%, at least one of Al, Mg, Co, Ca, Sr, Ba, Zn, Fe, and Mn: 0.1 to 30%, C: 1 to 40%, and the balance of oxygen and an inevitable impurity.

The phosphorus (P) may be included in an amount of 6.0 to 45 wt% within the insulation film. The phosphorus (P) may be derived from the metal phosphate within the insulation film composition, or may be diffused from the electrical steel sheet substrate 10. If a ratio of the phosphorus (P) is too high, a sticky problem in which the film becomes sticky after it is formed may occur. If the ratio of the phosphorus (P) is too low, there may be a problem in which adhesiveness of a coating agent is reduced. For example, it may include 18 to 23 wt% of P.

The silicon (Si) may be included in an amount of 11 to 80 wt% within the insulation film. The silicon (Si) may be derived from the silica or the oxide within the insulation film composition, or may be diffused from the electrical steel sheet substrate 10. If a ratio of the silicon (Si) is too high, hardness of the film may be too high so that processability is lowered, and if the ratio of the silicon (Si) is too low, the film tension effect due to the silicon may be reduced. For example, it may include 20 to 45 wt% of silicon (Si).

The chromium (Cr) may be included in an amount of 0.5 to 10 wt% within the insulation film. The chromium (Cr) may be derived from the chromium oxide within the insulation film composition, or may be diffused from the electrical steel sheet substrate 10. If a ratio of the chromium (Cr) is too high, a viscosity of the coating agent may be increased so that a problem may occur in an application property. If the ratio of the chromium (Cr) is too low, there may be a problem of deteriorating corrosion resistance. For example, it may include 1.5 to 2.3 wt% of the chromium (Cr).

The carbon (C) may be included in an amount of 1 to 40 wt% within the insulation film. The carbon (C) may be derived from the carbon structure within the insulation film composition, or may be diffused from the electrical steel sheet substrate 10 during a formation process of the insulation film. If a ratio of the carbon (C) is too high, a problem may occur because ash remains on a surface of the film after the film is formed. If the ratio of the carbon (C) is too low, transparency of the film may be increased so that there may be a problem of lowering a shielding property. For example, it may include 3 to 40 wt% of the carbon (C).

The balance (or the remainder) may include the oxygen (O). For example, it may include 35 to 75 wt% of the oxygen.

The insulation film may further include 0.1 to 35% of one or more of Al, Mg, Co, Ca, Sr, Ba, Zn, Fe, and Mn.

Al, Mg, Co, Ca, Sr, Ba, Zn, Fe, and Mn described above may be derived from the metal phosphate added to the insulation film composition. When Al, Mg, Co, Ca, Sr, Ba, Zn, Fe, and Mn are further added within the above-described range, adhesiveness may be further improved. For example, it may include 20 to 33 wt% of at least one of Al, Mg, Co, Ca, Sr, Ba, Zn, Fe, and Mn.

A method for manufacturing the grain-oriented electrical steel sheet according to an embodiment of the present disclosure may include a step of applying the composition for forming the insulation film on the electrical steel sheet substrate and a step of drying the steel sheet to which the composition for forming the insulation film is applied to form the insulation film.

First, the composition for forming the insulation film may be applied on the electrical steel sheet substrate.

Because the electrical steel sheet substrate and the composition for forming the insulation film are the same as those described above, a repeated description thereof will be omitted.

The composition for forming the insulation film before the application may be managed at a temperature of 10 to 30°C. If a temperature is lower than the above-described range, a viscosity may be increased so that it is difficult to manage a uniform application amount. If the temperature is too high, a gelation phenomenon of the composition for forming the insulation film may be accelerated to degrade surface quality. For example, the composition for forming the insulation film before the application may be managed at a temperature of 15 to 25°C.

When the composition for forming the insulation film is applied, the application amount may be in a range of 0.5 to 6.0 g/m². If the application amount is too large, the insulation film may become too thick, and adhesiveness to the steel sheet and a space factor of an electrical steel sheet product may be deteriorated. If the application amount is too small, a tension provided by the insulation film may be weakened. For example, the application amount may be 1.0 to 5.0 g/m².

In the drying step, the steel sheet may be heated and dried at 550 to 900°C for 10 to 50 seconds.

Hereinafter, an embodiment of the present disclosure will be described in detail. However, this is provided as an example, the present disclosure is not limited thereto, and the present disclosure is defined only by the scope of the claims described below.

### Experimental example: checking characteristic of metal type

A grain-oriented electrical steel sheet (300mm*60mm) including 3.1% of Si by weight and having a primary film with a sheet thickness of 0.23 mm finished annealed is prepared as a test material.

The composition for forming the insulation film including a component and 100 g of water listed in Table 1 below is prepared. Metal oxide and a powder (e.g., composite oxide and a carbon structure) are simultaneously introduced to phosphoric acid when the phosphate is manufactured, the metal phosphate is manufactured by stirring in a heating state of 80°C or higher, and then chromium oxide and colloidal silica are introduced and mixed to manufacture the composition. After 4 g/m² of the composition for forming the insulation film is applied to the test material, a specimen is manufactured by drying the applied composition at 850°C for 30 seconds. A physical property is measured using the measured specimen to be shown in Table 3 below, and a composition of the insulation film formed at the specimen is listed to be shown in Table 2 below.

In a corrosion resistance measurement method, a rust occurrence area of the specimen is evaluated for 8 hours in a 5 wt% NaCl solution at 35°C.

In a method for measuring the film tension, the insulation film formed on one surface of both surfaces is removed, the test material is bent in one direction due to a tensile stress applied by the insulation film formed on the remaining surface, and a force required for a degree of the bending is measured to evaluate the film tension due to the insulation film.

In measurement of Franklin insulation, the insulation is measured by a storage current value when an input of 0.5 V and a current of 1.0 A are passed under a pressure of 300 PSI.

In measurement of impedance insulation, the insulation is expressed using KCI that is an electrolyte solution, Pt that is a counter electrode, and Ag/AgCl that is a reference, and a real part value by measurement of impedance resistance is organized. When the resistance is measured, terminals at both ends are measured at a distance of 100 mm in all specimens.

In measurement of the film transparency, as described above, the film transparency is measured by reflectometry.

In uniformity of the coating solution, immediately after the solution is manufactured, a powder dispersion state within the solution is determined as good/bad.

Whether a pore occurs within the film is observed using a focused ion beam scanning electron microscope.

**(Table 1)**

| Speci men | Metal phosphate (100g) | | Montmoril lonite (g) | Carbon black (g) | Colloidal silica (g) | Chromiu m oxide (g) | Uniformity of solution | |
|---|---|---|---|---|---|---|---|---|
| | Mg phosphate | Al phosphate | | | | | | |
| 1 | 75 | 25 | 1 | 12 | 150 | 5 | Good | Compara tive Example 1 |
| 2 | | | 4 | 9 | | | Good | Compara tive Example 2 |
| 3 | | | 9 | 4 | | | Good | Compara tive Example 3 |
| 4 | | | 12 | 1 | | | Good | Compara tive Example 4 |
| 5 | 75 | 25 | 4 | 46 | 150 | 5 | Good | Embodi ment 1 |
| 6 | | | 15 | 35 | | | Good | Embodi ment 2 |
| 7 | | | 35 | 15 | | | Good | Embodi ment 3 |
| 8 | | | 46 | 4 | | | Good | Embodi ment 4 |
| 9 | 75 | 25 | 16 | 184 | 150 | 5 | Bad | Compara tive Example 5 |
| 10 | | | 60 | 140 | | | Bad | Compara tive Example 6 |
| 11 | | | 140 | 60 | | | Bad | Compara tive Example 7 |
| 12 | | | 184 | 16 | | | Bad | Compara tive Example 8 |
| 13 | 75 | 25 | - | - | 150 | 5 | - | Compara tive Example 9 |

**(Table 2)**

| Specimen | P | Si | Cr | Al | Mg | Fe | C | |
|---|---|---|---|---|---|---|---|---|
| 1 | 27.7 | 28.5 | 2.8 | 7.3 | 20.9 | 0.03 | 12.8 | Comparative Example 1 |
| 2 | 27.7 | 30.4 | 2.8 | 8.3 | 20.8 | 0.11 | 10.0 | Comparative Example 2 |
| 3 | 27.7 | 33.8 | 2.8 | 10.0 | 21.0 | 0.25 | 4.4 | Comparative Example 3 |
| 4 | 27.7 | 35.9 | 2.8 | 11.0 | 21.0 | 0.33 | 1.11 | Comparative Example 4 |
| 5 | 20.0 | 21.5 | 2.0 | 5.9 | 14.8 | 0.08 | 36.15 | Embodiment 1 |
| 6 | 20.0 | 26.9 | 2.0 | 8.5 | 14.9 | 0.30 | 27.7 | Embodiment 2 |
| 7 | 20.0 | 36.7 | 2.0 | 13.4 | 15.3 | 0.70 | 12.0 | Embodiment 3 |
| 8 | 20.0 | 42.2 | 2.0 | 16.1 | 15.4 | 0.92 | 3.21 | Embodiment 4 |
| 9 | 25.0 | 12.5 | 2.5 | 4.0 | 6.8 | 0.14 | 66.56 | Comparative Example 5 |
| 10 | 25.0 | 22.3 | 2.5 | 8.9 | 7.1 | 0.55 | 51.2 | Comparative Example 6 |
| 11 | 25.0 | 40.6 | 2.5 | 18.0 | 7.5 | 1.30 | 22.4 | Comparative Example 7 |
| 12 | 25.0 | 51.0 | 2.5 | 23.1 | 7.8 | 1.73 | 6.03 | Comparative Example 8 |
| 13 | 32.0 | 32.3 | 3.5 | 8.1 | 24.2 | - | - | Comparative Example 9 |

**(Table 3)**

| Specimen | Insulation (mA) | Film transpa rency (%) | Whether pore occurs within film | Corrosion resistance (%) | Coating tension (kgf/m m²) | Coating tension after SRA (kgf/m m²) | Note |
|---|---|---|---|---|---|---|---|
| 1 | 262 | 21 | X | 7.2 | 0.21 | 0.2 | Compar ative Exampl e 1 |
| 2 | 238 | 26 | X | 7.4 | 0.23 | 0.22 | Compar ative Exampl e 2 |
| 3 | 272 | 29 | X | 6.5 | 0.29 | 0.27 | Compar ative Exampl e 3 |
| 4 | 202 | 33 | X | 9.4 | 0.31 | 0.29 | Compar ative Exampl e 4 |
| 5 | 33 | 9 | X | < 0.1 | 0.35 | 0.36 | Embodi ment 1 |
| 6 | 12 | 11 | X | < 0.1 | 0.65 | 0.62 | Embodi ment 2 |
| 7 | 11 | 12 | X | < 0.1 | 0.72 | 0.7 | Embodi ment 3 |
| 8 | 5 | 13 | X | < 0.1 | 0.88 | 0.84 | Embodi ment 4 |
| 9 | 11 | 11 | O | 3.2 | 0.35 | 0.34 | Compar ative Exampl e 5 |
| 10 | 9 | 11 | O | 5.5 | 0.38 | 0.35 | Compar ative Exampl e 6 |
| 11 | 7 | 12 | O | 3.3 | 0.4 | 0.37 | Compar ative Exampl e 7 |
| 12 | 5 | 19 | O | 4.8 | 0.42 | 0.39 | Compar ative Exampl e 8 |
| 13 | 250 | 95 | X | 4.5 | 0.33 | 0.25 | Compar ative Exampl e 9 |

As may be seen from Tables 1 to 3, in an embodiment in which the carbon structure and the composite oxide are appropriately included, it may be confirmed that the insulation, the film shielding, whether the pore occurs, the corrosion resistance, and the coating tension are improved overall in all composition systems.

On the other hand, it may be confirmed that the comparative example in which components are not properly included is inferior in terms of the insulation, the film shielding, whether the pore occurs, the corrosion resistance, and the coating tension.

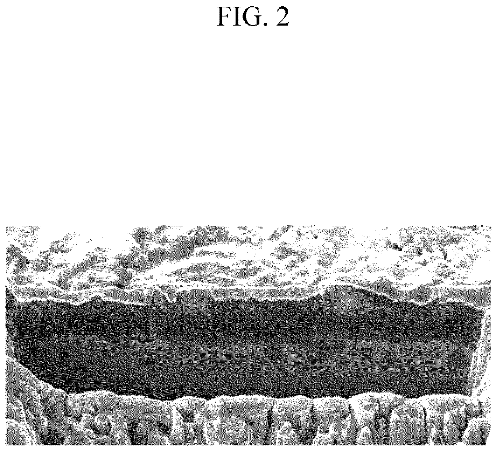

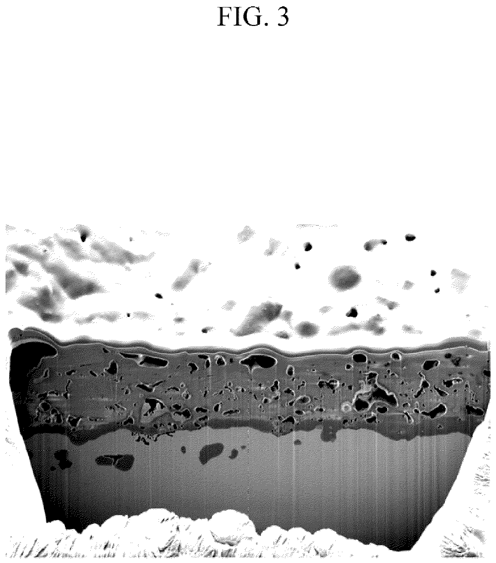

Referring to FIG. 2 and FIG. 3, it may be confirmed that the insulation film is densely formed without any empty portions in Embodiment 1 shown in FIG. 2. It may be confirmed that a plurality of pores expressed as dark portions are formed within the insulation film in Comparative Example 8 shown in FIG. 3.

The present disclosure is not limited to the embodiments, may be manufactured in various different forms, and a person of ordinary skill in the art to which the present disclosure belongs will be able to understand that the present disclosure may be implemented in other specific forms without changing the technical idea or essential feature of the present disclosure. Therefore, it should be understood that the embodiments described above are illustrative and not limited in all respects.

## Claims

1. A composition for forming an insulation film of an electrical steel sheet, comprising:
100 parts by weight of metal phosphate that includes at least one of Al, Mg, Co, Ca, Sr, Ba, Zn, and Mn;
3 to 150 parts by weight of a carbon structure;
3 to 150 parts by weight of oxide that includes at least two of Al, Si, Mg, and Fe; and
50 to 250 parts by weight of silica,
wherein a sum amount of the carbon structure and the oxide includes 20 to 150 parts by weight.

2. The composition of claim 1, wherein the carbon structure includes at least one of natural graphite, artificial graphite, carbon black, a carbon nanotube, a carbon fiber, and graphene.

3. The composition of claim 1, wherein the oxide including the at least two of Al, Si, Mg, and Fe includes at least one of montmorillonite, kaolinite, illite, talc, and chromite.

4. The composition of claim 1, wherein an average particle size of the silica is 7 to 20 nm.

5. The composition of claim 1, further comprising 2 to 10 parts by weight of chromium oxide.

6. An electrical steel sheet, comprising:
an electrical steel sheet substrate; and
an insulation film that is disposed on a surface of the electrical steel sheet substrate,
wherein the insulation film includes 100 parts by weight of metal phosphate that includes at least one of Al, Mg, Co, Ca, Sr, Ba, Zn, and Mn, 3 to 150 parts by weight of a carbon structure, 3 to 150 parts by weight of oxide that includes at least two of Al, Si, Mg, and Fe, and 50 to 250 parts by weight of silica, and a sum amount of the carbon structure and the oxide includes 20 to 150 parts by weight.

7. The electrical steel sheet of claim 6, wherein the insulation film has a surface roughness of 0.5 µm or less, and has a film transparency of 20% or less.

8. The electrical steel sheet of claim 6, wherein the insulation film includes, in wt%, P: 6.0 to 45%, Si: 11 to 80%, Cr: 0.5 to 10%, at least one of Al, Mg, Co, Ca, Sr, Ba, Zn, Fe, and Mn: 0.1 to 35%, C: 1 to 40%, and the balance of oxygen (O) and an inevitable impurity.

9. A method for manufacturing an electrical steel sheet, comprising:
preparing an electrical steel sheet substrate;
applying the composition for forming the insulation film according to claim 1 to a surface of the electrical steel sheet substrate; and
heat-treating the applied composition.

10. The method of claim 9, further comprising keeping the composition for forming the insulation film at a temperature of 10 to 30°C before the applying of the composition.

11. The method of claim 9, wherein the composition for forming the insulation film is applied in a range of 0.5 to 6.0 g/m² in the applying of the composition.

12. The method of claim 9, wherein the applied composition is heat-treated at 550 to 900°C for 10 to 50 seconds.
